# EUROPEAN PATENT SPECIFICATION

(11) **EP 1 267 606 B1**
(45) Date of publication and mention of the grant of the patent: **25.01.2006**
(21) Application number: 01917988.6
(22) Date of filing: 27.03.2001
(51) Int. Cl.: A01J 5/017, A01J 7/04

(54) **MILKING APPARATUS WITH PRETREATMENT SYSTEM**
MELKANLAGE MIT VORBEHANDLUNGSSYSTEM
MACHINE A TRAIRE AVEC SYSTEME DE PRETRAITEMENT

(30) Priority: 29.03.2000 NL 1014781
(43) Date of publication of application: 02.01.2003
(73) Proprietor: Idento Electronics B.V., 8307 AA Ens (NL)
(72) Inventor: VAN DER LINGEN, Daan, Dani[l, NL-8061 BP Hasselt (NL); VAN DER SLUIS, Peter, Willem, NL-8271 PP IJsselmuiden (NL); DE VRIES, Franciscus, Johannes, Petrus, NL-8475 EK Nijeholtpade (NL)
(74) Representative: Grootscholten, Johannes A.M.
(86) International application number: PCT/NL2001/000248
(87) International publication number: WO 2001/072116

(56) References cited:
- EP-A- 0 728 412
- EP-A- 0 789 995
- WO-A-99/27770

## Description

The present invention relates to an apparatus for milking animals, comprising: a milking robot with a robot arm having gripping means at least close to a free end thereof for successively gripping and arranging separate teat cups on the teats of udders of livestock animals; and a pretreatment system for pretreating, such as cleaning, the teats.

Such an apparatus is known from EP-A-0.728.412, where separate teat cups 28 and cleaning cups, which form the pretreatment system, are disposed separately in the vicinity of a milking box in which animals are milked. For each teat a milking robot will have to successively seize collect, place, remove and put away a cleaning cup and then perform these actions again for the actual teat cup. This is an unnecessarily heavy loading of the milking robot. The capacity of the milking robot is moreover limited hereby because the wide variety of movements costs time.

The present invention has for its object to at least lessen or even obviate the above stated problems of the known art, for which purpose an apparatus is provided which is distinguished in that the pretreatment system comprises a pretreatment cup which is arranged on the robot arm and which is movable between an inactive folded-away position and a folded-up active position in which the pretreatment cup has a position relative to the robot arm which is at least comparable to that of a teat cup for arranging on a teat by the robot arm.

In an apparatus according to the present invention a milking robot can thus carry the cleaning cup into the folded-up active position, search for a desired teat and remain stationary during cleaning of this teat, where according to the known art two additional movements were necessary to collect and put away the cleaning cup. According to the invention these movements are no longer necessary. The milking robot is therefore less heavily loaded and has more time available per animal for milking or can milk more animals per milking unit.

Because the pretreatment cup has a position, particularly in the folded-up active situation, relative to the robot arm which is at least comparable to the position of a teat cup for arranging on a teat by the robot arm, the same positioning mechanism can also be applied for finding a desired teat when the cleaning cup is arranged as the search algorithm used for the actual teat cups.

It is noted that an apparatus is known from WO 99/27770 with a milking robot which is disposed fixedly at a milking box and which comprises a robot arm on which both a teat cup and a cleaning cup are permanently arranged. This results in a very rigid system in which one robot arm is required per teat of an udder of an animal for milking. This results in very high costs and long periods in which the robot arms do no more than hold a cleaning cup or a teat cup connected onto a relevant desired teat of the udder of the animal for milking. Depending on the function - cleaning or milking - the teat cup and the cleaning cup are interchangeable in position relative to each other.

It is further noted that an apparatus is known from EP-A-0.789.995 wherein the pretreatment system is formed by rotating brushes for cleaning the teats. The brushes are arranged on a pivot mechanism which can be placed in active operational position and an inactive position. In the apparatus known from this publication both the teat cups and the pretreatment system form a per se fixed component of the robot arm. The milking robot remains stationary and in use not only during the cleaning of the teats but also during the whole time period required for the milking. In contrast to the two publications mentioned above, a milking robot according to the present invention can, after pretreatment of an udder of an animal and connection of the actual teat cups, be deployed for a different animal at another milking box. To this end the milking robot can be displaced physically or pivot to a nearby milking box where a milked cow has meanwhile been replaced by a cow still to be milked.

In another embodiment the apparatus has the feature that the robot arm comprises a gripper on the substantially free end thereof for individually gripping teat cups and displacing thereof in each case to a relevant teat and arranging the teat cups thereon, wherein the pretreatment cup has a form at least comparable to that of the teat cups and in an active position can be gripped by the gripper. As a result of these measures the positioning, placing and displacing of the pretreatment cup is also made practically identical to the actions in respect of the teat cup. This also results in a considerable simplification.

In a preferred embodiment the pretreatment cup is arranged on the robot arm with a folding mechanism. The folding mechanism is of course controllable and regulates placing of the pretreatment cup in the folded-up, active or folded-away positions.

In such an embodiment the folding mechanism can comprise a tilting arm between the pretreatment cup and the robot arm, which tilting arm is bent such that in the folded-away position the pretreatment cup lies against the robot arm. The space required for the pretreatment cup in the folded-away position is thus minimal, as is the obstruction the robot arm can encounter therefrom during arranging or placing of teat cups used for milking.

In a preferred embodiment with a folding mechanism and a control therefor, the apparatus according to the invention can have the feature that the control is a cylinder extending substantially in the length direction of the robot arm. Such a cylinder can be hydraulic or pneumatic, although it is noted that a pneumatic cylinder is particularly advantageous because of the pneumatic provisions already typically provided for the actual milking of the animal, such as a vacuum hose.

In the pretreatment with the pretreatment cup there can take place: washing of the teat with cold or warm water, guiding of a preferably warm airflow along the teat so as to dry it, application of cleaning agents or pharmaceutical substances etc. The pretreatment cup is preferably connected for this purpose via the robot arm to at least one of the means from the group comprising: water feed; warm water feed; warm air provision; cleaning agent feed, drain etc.

The above described and other advantages, features and embodiments of apparatuses according to the present invention will be described in more detail and only by way of example hereinbelow with reference to the annexed drawing, in which:
fig. 1 shows a partly cut-away and schematic view of an apparatus according to the present invention with a pretreatment system in the active position; and
fig. 2 shows a schematic view of an apparatus according to fig. 1 in operation with the pretreatment system in deactivated position.

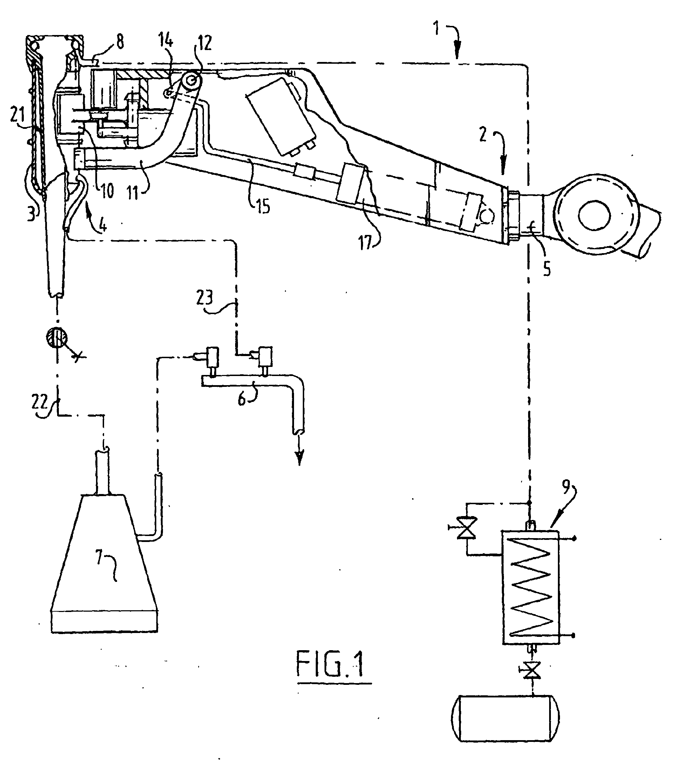

Fig. 1 shows a schematic and partly cut-away view of a milking apparatus 1 according to the present invention. Milking apparatus 1 comprises a milking robot 2, a robot arm 5 of which is explicitly shown. A pretreatment system 4 further comprises a pretreatment cup 3 which is connected onto a vacuum system 6 in combination with a separation tank 7 and a warm air feed 8 which is connected to a heating device 9. In the embodiment shown here the pretreatment system 4 serves to clean the teat of an udder of an animal for milking, for which purpose the pretreatment cup 3 is supplied with water from a water feed (not shown) under the influence of a suitable control with vacuum from vacuum system 6.

The water used during washing of teat 19 is carried via outlet 22 to separation tank 7.

A lining 21 is arranged in pretreatment cup 3. Formed between cup 3 and lining 21 is a space which is connected to vacuum system 6 via pressure line 23. Under the influence of a pulsating vacuum generated by vacuum system 6 the teat 19 wetted with water is washed by the pulsating action of lining 21. The teat, which is then still inserted in pretreatment cup 3, is then dried with air from heating 9.

During the pulsating action of lining 21 during washing and/or warm air drying of teat 19 some so-called "foremilk" is usually released from teat 19. This is likewise drained via outlet 22 to separation tank 7.

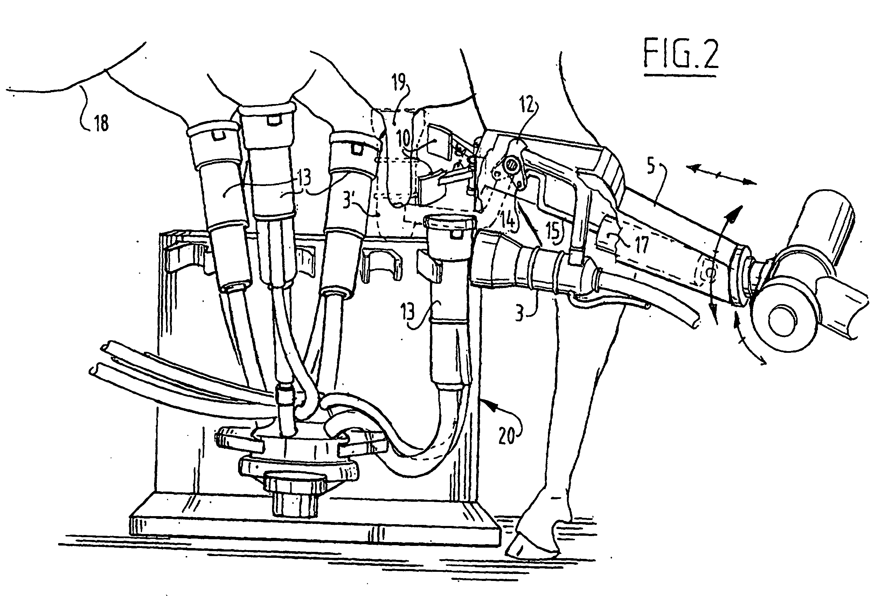

On the free outer end, i.e. by pretreatment cup 3 in fig. 1, robot arm 5 comprises a gripper 10. This latter is suitable for gripping pretreatment cup 3 as well as usual teat cups such as are shown particularly in fig. 2. The pretreatment cup 3 has for this purpose a design similar to that of the usual teat cups. In the folded-up situation as shown in fig. 1 the pretreatment cup 3 thus has a position relative to robot arm 5 which is at least comparable to the position of the teat cups in the process of arranging the pretreatment cup 3 on one of the teats of the udder of an animal for milking. The means (not shown) for positioning the teat cups can therefore be used for arranging, placing and displacing pretreatment cup 3.

Apart from gripper 10, the pretreatment cup 3 is connected to robot arm 5 via a bent arm 11. Pretreatment cup 3 and the bent arm are attached fixedly to each other in the embodiment shown here, while the end of the bent arm 11 opposite pretreatment cup 3 is arranged on robot arm 5 for rotation on a rotation shaft 12. Arm 11 is bent such that when arm 11 is rotated on rotation shaft 12 the pretreatment cup 3 comes to lie against the underside in fig. 1 of robot arm 5. This situation is shown in fig. 2. The pretreatment cup 3 is hereby moved out of the path for arranging of teat cups 13, as will be further described below with reference to fig. 2.

At the rotation shaft the bent arm is fixedly mounted on a plate 14, which is elongate, and is connected on the side opposite rotation shaft 12 to a pull arm 15, which is in turn connected to the piston rod 16 of a cylinder 17. Cylinder 17 is pneumatic and can thus be controlled with the same system as that of which vacuum system 6 forms part for control thereof. Additionally or alternatively, a hydraulic cylinder can be applied etc., all depending on the other components of milking apparatus 1 and the possibilities these create.

Fig. 2 shows milking apparatus 1 in operation during milking of a cow 18. Pretreatment cup 3 is shown in dotted lines on teat 19 of cow 18. Gripper 10 is here still connected onto the pretreatment cup 3 shown in dotted lines. As already described above, pretreatment cup 3 has the same form and positioning relative to the robot arm as a usual teat cup, whereby positioning of pretreatment cup 3 can take place in the same manner as in the case of the usual teat cups 13. After pretreatment of teat 19 the pretreatment cup 3 is folded aside to the position shown in full lines relative to the robot arm 5 thereof by pulling on pull arm 15, whereafter the bent arm 11 will carry the pretreatment cup 3 back up from the underside in fig. 2 of robot arm 5.

After the pretreatment, for instance cleaning, of teat 19 and folding away of pretreatment cup 3, gripper 10 is free to collect a teat cup 13 for the just pretreated teat 19 at a holder 20 placed for this purpose in the vicinity. Fig. 2 shows that holder 20 carries another teat cup 13 which can be collected by the gripper 10 on the free end of robot arm 5 so as to be arranged on the teat 19 that is still free; teat cups 13 have already been arranged on the other teats of cow 18.

It will be apparent that different additional, alternative and adapted embodiments are possible within the scope of the present invention as defined by the appended claims. The invention can thus be applied to livestock other than cows, such.as goats etc. The pretreatment cup 3 can be arranged at a different position than the gripper, in the active situation thereof, and for instance then not be fold-away, since the pretreatment cup does not then obstruct the path of the gripper, which would result in a simplification in respect of the folding mechanism which in the foregoing is formed substantially by cylinder 17, but which would result in separate means for positioning the free end of the robot arm such that the pretreatment cup can be arranged on the relevant teat. It will be apparent that many other embodiments are possible within the scope of the present invention.

## Claims

1. Apparatus for milking animals, comprising a milking robot with a robot arm having gripping means at least close to a free end thereof for successively gripping and arranging separate teat cups on the teats of udders of livestock animals, and a pretreatment system for pretreating, such as cleaning, the teats, wherein the pretreatment system comprises a pretreatment cup which is arranged on the robot arm and which is movable between an inactive folded-away position and a folded-up active position in which the pretreatment cup has a position relative to the robot arm which is at least comparable to that of a teat cup for arranging on a teat by the robot arm.

2. Apparatus as claimed in claim 1, wherein the robot arm comprises a gripper on the substantially free end thereof for individually gripping teat cups and displacing thereof in each case to a relevant teat and arranging the teat cups thereon, wherein the pretreatment cup has a form at least comparable to that of the teat cups and in an active position can be gripped by the gripper.

3. Apparatus as claimed in claim 1, wherein the pretreatment cup is arranged on the robot arm with a folding mechanism.

4. Apparatus as claimed in claim 3, wherein the folding mechanism comprises a tilting arm between the pretreatment cup and the robot arm, which tilting arm is bent such that in the folded-away position the pretreatment cup lies against the robot arm.

5. Apparatus as claimed in claim 3, .wherein a control is arranged between the robot arm and the folding mechanism to carry the pretreatment cup selectively into the folded-up active position and the folded-away position with the folding mechanism.

6. Apparatus as claimed in claim 5, wherein the control is a cylinder extending substantially in the length direction of the robot arm.

7. Apparatus as claimed in claim 5, wherein the control is hydraulic.

8. Apparatus as claimed in claim 6, wherein the control is pneumatic.

9. Apparatus as claimed in one or more than one of the foregoing claims, wherein the pretreatment cup is connected via the robot arm to at least one of the means from the group comprising: water feed; warm water feed; warm air provision; cleaning agent feed, drain etc.

## Patentansprüche

1. Vorrichtung zum Melken von Tieren, umfassend einen Melkroboter mit einem Roboterarm, der zumindest in der Nähe eines seiner freien Enden Greifmittel hat, um aufeinanderfolgend getrennte Melkbecher zu greifen und an den Zitzen von Eutern von Vieh anzuordnen und ein Vorbehandlungssystem zur Vorbehandlung, wie beispielsweise einer Reinigung der Zitzen, wobei das Vorbehandlungssystem einen Vorbehandlungsbecher umfaßt, der an dem Roboterarm angeordnet ist und der bewegbar ist zwischen einer inaktiven, weggefalteten Stellung und einer aktiven, aufgefalteten Stellung, in welcher der Vorbehandlungsbecher eine Position relativ zu dem Roboterarm hat, die zumindest vergleichbar ist mit derjenigen eines Melkbechers zur Anordnung an einer Zitze mit Hilfe des Roboterarms.

2. Vorrichtung nach Anspruch 1, bei welcher der Roboterarm einen Greifer an seinem im wesentlichen freien Ende umfaßt, um individuell Melkbecher zu greifen und sie jeweils zu versetzen zu einer relevanten Zitze und die Melkbecher daran anzuordnen, wobei der Vorbehandlungsbecher eine Form hat, die zumindest mit derjenigen der Melkbecher vergleichbar ist und in einer aktiven Stellung von dem Greifer gegriffen werden kann.

3. Vorrichtung nach Anspruch 1, bei welcher der Vorbehandlungsbecher an dem Roboterarm mit einem Faltmechanismus angeordnet ist.

4. Vorrichtung nach Anspruch 3, bei welcher der Faltmechanismus einen Neigearm zwischen dem Vorbehandlungsbecher und dem Roboterarm umfaßt, wobei der Neigearm derart gebogen ist, daß der Vorbehandlungsbecher in der weggefalteten Stellung an dem Roboterarm liegt.

5. Vorrichtung nach Anspruch 3, bei welcher eine Steuerung zwischen dem Roboterarm und dem Faltmechanismus angeordnet ist, um den Vorbehandlungsbecher wahlweise in die aktive, aufgefaltete Stellung und die weggefaltete Stellung mit dem Faltmechanismus zu führen.

6. Vorrichtung nach Anspruch 5, bei welcher die Steuerung ein sich im wesentlichen in der Längsrichtung des Roboterarms erstreckender Zylinder ist.

7. Vorrichtung nach Anspruch 5, bei welcher die Steuerung hydraulisch ist.

8. Vorrichtung nach Anspruch 6, bei welcher die Steuerung pneumatisch ist.

9. Vorrichtung nach einem oder mehreren der vorstehenden Ansprüche, bei welcher der Vorbehandlungsbecher über den Roboterarm mit wenigstens einem Mittel der Gruppe verbunden ist, umfassend: Wasserzufuhr; Warmwasserzufuhr; Warmluftvorsehung; Reinigungsmittelzufuhr, -abfuhr, etc.

## Revendications

1. Machine à traire les animaux, comportant un robot à traire équipé d'un bras robot comportant un moyen de préhension situé au moins à proximité d'une extrémité libre de ce bras pour successivement saisir et disposer des gobelets trayeurs sur les trayons de pis de pièces de bétail, et un système de prétraitement pour pré-traiter, par exemple nettoyer, les trayons, le système de prétraitement comprenant un gobelet de prétraitement fixé sur le bras robot et déplaçable entre une position inactive escamotée et une position active relevée dans laquelle le gobelet de prétraitement occupe une position par rapport au bras robot qui est au moins comparable à celle d'un gobelet trayeur pour sa mise en place sur un trayon par le bras robot.

2. Machine selon la revendication 1 dans laquelle le bras robot comporte une pince à son extrémité sensiblement libre pour saisir les gobelets trayeurs individuellement et les déplacer dans chaque cas vers un trayon et positionner les gobelets trayeurs sur les trayons, le gobelet de prétraitement ayant une forme au moins comparable à celle des gobelets trayeurs et, dans une position active, pouvant être saisi par la pince.

3. Machine selon la revendication 1 dans laquelle le gobelet de prétraitement est fixé sur le bras robot avec un mécanisme de rabattement.

4. Machine selon la revendication 3 dans laquelle le mécanisme de rabattement comporte un bras pivotant entre le gobelet de prétraitement et le bras robot, ledit bras pivotant étant courbé de telle sorte que, dans la position escamotée, le gobelet de prétraitement repose contre le bras robot.

5. Machine selon la revendication 3 dans laquelle une commande est installée entre le bras robot et le mécanisme de rabattement pour amener le gobelet de prétraitement de manière sélective dans la position active relevée et dans la position escamotée à l'aide du mécanisme de rabattement.

6. Machine selon la revendication 5 dans laquelle la commande est un vérin s'étendant sensiblement dans la direction longitudinale du bras robot.

7. Machine selon la revendication 5 dans laquelle la commande est hydraulique.

8. Machine selon la revendication 6 dans laquelle la commande est pneumatique.

9. Machine selon l'une ou plusieurs des revendications précédentes dans laquelle le gobelet de prétraitement est relié, via le bras robot, à au moins l'un des moyens de l'ensemble comportant : une alimentation d'eau ; une alimentation d'eau chaude ; une réserve d'air chaud ; une alimentation en agent de nettoyage ; une vidange, etc ...
